Europäisches Patentamt

European Patent Office

Office européen des brevets

(11) Publication number: **0 080 018**
**B1**

(12) EUROPEAN PATENT SPECIFICATION

(45) Date of publication of patent specification: **06.11.85**

(51) Int. Cl.⁴: **F 16 K 11/06**

(21) Application number: **82106512.5**

(22) Date of filing: **19.07.82**

(54) Mixing valve.

(30) Priority: **23.11.81 US 323925**

(43) Date of publication of application:
**01.06.83 Bulletin 83/22**

(45) Publication of the grant of the patent:
**06.11.85 Bulletin 85/45**

(84) Designated Contracting States:
**AT BE CH DE FR GB IT LI NL SE**

(56) References cited:
**DE-A-1 963 451**
**US-A-1 357 294**
**US-A-3 285 278**
**US-A-3 840 048**
**US-A-3 916 950**

(73) Proprietor: **STANADYNE INC.**
**92, Deerfield Road**
**Windsor Connecticut (US)**

(72) Inventor: **Givler, John D.**
**32602 Carriage Lane**
**Avon Lake Ohio 44012 (US)**

(74) Representative: **Patentanwälte Grünecker, Dr.**
**Kinkeldey, Dr. Stockmair, Dr. Schumann, Jakob,**
**Dr. Bezold, Meister, Hilgers, Dr. Meyer-Plath**
**Maximilianstrasse 58**
**D-8000 München 22 (DE)**

## Description

The present invention relates to mixing valves as described in the preamble of patent claim 1.

A mixing valve of such type is known from US Patent 3 840 048. The known valve shows inlet ports for hot and cold water which are provided with seals. The seals of hot and cold water inlet ports have openings which show the same cross-section areas for the flow of cold and hot water. Such valves have common application in residential plumbing, particularly in kitchen and lavatory faucets and in shower and tub valves. In particular, the present invention is directed to such a valve which is usable in areas in which the cold water supply has a substantially greater pressure than that of the hot water supply. For example, it is not unknown in some areas of the world for the cold water supply to be at a pressure as much as twelve times higher than that of the hot water supply. A more conventional pressure differential might be an 8 to 1 ratio, but even such a pressure differential makes it difficult for the valve user to have any substantial degree of valve control in the so-called "comfort zone" which is normally considered to be that range of temperatures which are usable for a satisfactory shower. It is most advantageous in a mixing valve, particularly one in a shower area, to permit the user to have a substantial degree of valve control in the comfort zone (normally 32—40°C) so that the water temperature setting for a comfortable shower or other use of the valve is not in any sense critical or difficult to make.

It is therefore an object of the present invention to provide a valve which makes it easy for the valve user to have any substantial degree of valve control in the so-called "comfort zone" even in the case of different pressure of hot and cold water.

The present invention provides a valve structure which is usuable in areas in which there is a substantial pressure differential between hot and cold water by restricting the passage of cold water through the valve and by providing a controlled access of cold water into the valve when the valve is moved from a full hot position toward a position of mixed hot and cold water. Further, the valve provides a structure which prevents cross flow between the hot and cold water inlet ports, which cross flow can be a serious problem in areas where the cold water pressure is substantially above that of the hot water supply.

A primary purpose of the invention is a mixing valve usable in areas having substantially greater cold water pressure than hot water pressure and in which there are water modulation means therein so that the valve has a larger comfort zone for valve manipulation.

Another purpose is a valve of the type described in which the cold water port restricts the volume of water passing therethrough so as to provide a greater degree of valve operation in a zone in which hot and cold water is mixed to a temperature providing body comfort.

Another purpose is a valve of the type described in which the port seals, providing the valve closure, have openings therein, with the cold water opening being smaller than the hot water opening and with there being a passage of restricted size which provides access to the cold water opening, thereby providing a degree of temperature modulation permitting the valve to be used in areas where cold water pressure is substantially above that of the hot water supply.

Other purposes will appear in the ensuing specification drawings and claims.

An embodiment of the invention is illustrated diagrammatically in the following drawings wherein:

Figure 1 is a side elevational view of the valve in the mixing position,

Figure 2 is a top plan view of Figure 1,

Figure 3 is a side elevational view of the cold water seal as viewed along line 3—3 of Figure 2,

Figure 4 is an axial section of the valve of Figure 2 shown in the mixing position,

Figure 5 is an axial sectional view with the valve shown in the cold open/hot closed position.

Figure 6 is a section taken along line 6—6 of Figure 5,

Figure 7, is a sectional view, similar to Figure 6, with the valve shown in the cold closed/hot open position, and

Figure 8 is an inside view of the cold water seal of Figure 3.

In the drawings, a sleeve is indicated generally at 10 and the stem is indicated generally at 20. The sleeve is hollow and has outside O-ring grooves 12 and 14 which accommodate O-rings 13 and 15, respectively, which O-rings or seal members are utilized to seal opposite ends of the valve structure. In this connection, the valve shown herein is in the form of a cartridge in that all the movable parts of the valve are within a single self-contained unit which is normally positioned within a faucet housing. The sleeve has cold and hot water inlet ports 16 and 18, respectively, and outlet ports 22.

The exterior of the sleeve has annular shoulders 24 and 26 which define between them a circumferential space which contains the port seals for the valve, which the cold water port seal being indicated at 28 and the hot water port seal being indicated at 30. Details of the seal construction are illustrated in US Patent 3,840,048.

Stem 20 includes a shaft portion 32 which extends outwardly from the sleeve and has suitable flats 34 which will receive an operating handle for use in manipulating the valve. There are spaced grooves 36 and 38 on stem 20 which contain seal rings 37 and 39, respectively, with the exterior of the seal rings being in sealing engagement with the interior of sleeve 10.

The stem includes an undercut 40, circumferential in form and extending a substantial portion of the stem length, which undercut provides the means for conveying water from cold and hot water ports 16 and 18 to sleeve outlet ports 22. Undercut 40 is divided into two water paths, one for hot water and one for cold water, by a divider structure indicated at 42 which extends generally the length of undercut 40. The divider structure consists of two vanes or dividers each of which is positioned in appropriate notches in opposite ends of undercut 40.

The stem includes a piston member, cylindrical in form, and indicated at 44, which extends about a portion of undercut 40 and which has separated openings 46 and 48 therein. These openings may be placed in register with cold and hot water inlet ports 16 and 18 when the valve is used to control the volume and temperature of water passing therethrough. The peripheral areas about openings 46 and 48 may be coined inwardly so that when the valve member or stem is moved relative to the port seals, there is a smooth bearing surface for the port seals and there is no likelihood that the seals could be cut or otherwise worn.

Hot water seal 30 is substantially the same as illustrated in US Patent 3,840,048 and includes a semicircular body portion 50 and a port seal portion 52 with the inner peripheral rim 54 of port seal portion 52 being in sealing contact with piston 44. There are a plurality of outwardly extending beads 56 on the exterior of body 50, which beads will define a chamber 58 in register with hot water port 18 to the end that water flowing into the hot water port and into chamber 58 creates an inwardly directed bias or force upon port seal portion 52 to provide a firm seal between the seal and stem piston. The opening 59 for hot water seal 30 is generally circular in cross section.

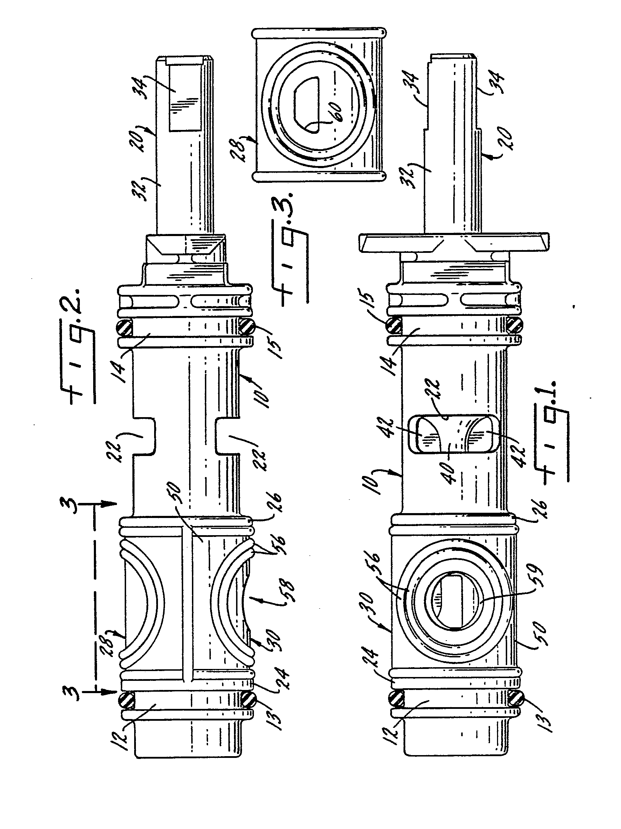

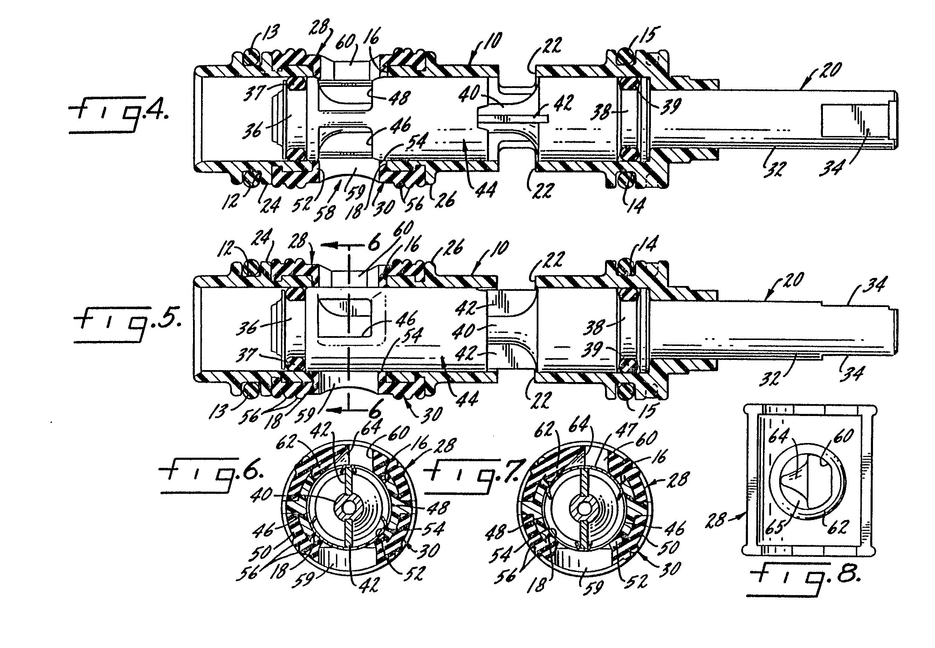

Cold water seal 28 (Figures 3 and 8) is the same as the hot water seal except for the arrangement of the opening through which water flows. Opening 60 is substantially less in cross sectional area than opening 59 in hot water seal 30 and may be on the order of about 50 percent of the size of the opening in the hot water seal. The invention should not be limited to any particular relationship between the hot and cold water openings, but it is necessary to substantially restrict the size of the cold water opening relative to the size of the hot water opening. In addition to providing an opening smaller in size than the hot water port, port seal portion 62 of cold water seal 28 is closed in the area opposite to that of opening 60 and there is a V-shaped notch 64 in the closed area. The notch has its smallest side away from opening 60 with the notch or restricted opening gradually increasing in size or in cross sectional area toward opening 60. The notch does not extend completely through the closed area and in fact the closed area has a roof indicated at 65. The roof on the notch tends to resist the normal tendency, under water pressure, for the sides of the notch to cave in or close, thus restricting the size of the opening. The roof maintains the notch with a uniform cross section under any type of water pressure.

Although the application has been described as providing a restriction on the cold water port, and a normal or unrestricted seal on the hot water port, it could be otherwise. The problem of pressure differential is normally associated with a water system in which the cold water pressure is substantially above that of the hot water supply. However, there may be some instances, perhaps rare, where the hot water pressure may be substantially greater than that of the cold water supply. Thus, the invention is specifically directed to a seal which reduces flow at the high pressure side, whether it be the hot or cold water supply.

When the valve is assembled and is properly located in a faucet construction, the relative position and arrangement of the port seal openings and stem openings 46 and 48 permit specific water flow ratios. When the stem is in the position of Figure 7 to permit full flow through the hot water port, the cold water port is closed by the major portion of piston 44 between openings 46 and 48 and designated at 47. As the stem is rotated clockwise toward a position in which cold water will flow through seal opening 60, initially such rotation places opening 48 in piston 44 into communication with the smallest portion of notch 64. Continued rotation of the stem in a clockwise direction, which conventionally will be from full hot toward a mixed position, places opening 48 in the piston in gradually increased communication with notch 64. Continued rotation in a clockwise direction will place both openings 59 and 60 (Figure 4) in full register with openings 46 and 48 in piston 44. By placing the notch in the cold water port seal in this particular disposition relative to the openings in the piston, it is possible to initially pass a small amount of cold water into the valve along with the full flow of hot water. Continued rotation increases the amount of cold water, but does so in relatively small amounts. This is particularly important in areas in which cold water pressure greatly exceeds the available hot water pressure. Accordingly, there is a greater degree of handle rotation in the so-called comfort zone. In fact, with a valve such as shown herein it is possible to have in the area of about 19° of handle rotation in the comfort zone which is normally considered to be that zone in which there is a substantial mixture of hot and cold water.

Of further advantage is the fact that when the hot water port is closed (Figures 5 and 6), opening 48 is fully in register with port seal opening 60 so that there may be a complete supply of cold water without use of notch 64. Thus, notch 64 is only utilized when there is a mixture of hot and cold water and when the user begins to move the valve toward a mixed position from either the full hot or full cold positions. The opening in the cold water port seal is completely accessible to the valve stem opening when the valve is in a full cold position.

The divider structure, separating the hot and cold water inlets, is particularly important when the valve is used in an area of relatively high cold water pressure. Otherwise, with a substantial differential between hot and cold water pressures, it might be impossible to have any hot water enter the valve.

## Claims

1. A mixing valve having a stationary member (10) and a movable member (20) with relative movement therebetween controlling the volume and temperature of water passing therethrough, a hot water inlet port (18) and a cold water inlet port (16) in said stationary member (10), seal members (28, 30) positioned in said inlet ports (16, 18) and each having an opening (59, 60) therein which controls the flow of water therethrough, characterized in that one of said port seal openings (60) having a cross sectional area less than that of said other port seal opening (59), said one port seal (60) further having a restricted passage (64) controlling the access of water from said seal opening (60) into said movable member (20).

2. The valve of claim 1 further characterized in that said restricted passage (64) gradually increases in size toward said opening (60).

3. The valve of claim 2 further characterized by and including divider means (42) positioned within said movable member (20) and separating said hot and cold water inlet ports (16, 18), preventing cross flow therebetween.

4. The valve of claim 1 further characterized in that said restricted passage is in the form of a generally V-shaped notch (64).

5. The valve of claim 4 further characterized in that said generally V-shaped notch (64) has a covering roof (65) preventing collapse of said restricted passage (64) due to water pressure thereon.

6. The valve of any of claims 1 to 5, characterized in that said stationary member comprises a sleeve (10), said movable member comprising a valve member (32) reciprocal and rotatable within said sleeve (10) to control the temperature and volume of water flow through said sleeve (10), and said port seals (28, 30) being positioned in said sleeve hot and cold water inlet ports (16, 18) and in sealing contact with said valve member.

7. The valve of claim 6 further characterized in that said valve member (32) includes port areas (46, 48) movable into register with said port seal openings (59, 60), with said valve member port areas (46, 48) being disposed to permit full flow through said cold water opening (60, 64) when said hot water port opening (59) is closed by said valve member (32), and to permit restricted flow through said cold water port seal passage (60, 64) when said hot water port (59) is full open.

8. The valve of claim 6 further characterized in that said valve member (32) includes port areas (46, 48) movable into register with said port seal openings (59, 60), with said valve member port areas (46, 48) being disposed to permit full flow through said hot water port seal opening (59) and no flow through said cold water port seal opening (60), at a particular position of said valve member (32), with movement of said valve member (32) toward a position whereby both hot and cold water will flow through said port seal openings (59, 60) causing the first flow of cold water to be through said restricted passage (64).

9. The valve of claim 6 further characterized in that said seals (28, 30) each include a body portion (50) circumferentially positioned about said sleeve (10), and a port seal (52, 62) portion extending through said sleeve hot and cold water inlet ports (16, 18) and into sealing engagement with said valve member (32), said restrictive passage being in the form of a notch (64) formed in said port seal portion (62) of said cold water port seal (28).

## Revendications

1. Robinet mitigeur ayant un élément fixe (10) et un élément mobile (20), un mouvement relatif entre eux réglant le volume et la température de l'eau passant à travers le robinet, un orifice d'entrée d'eau chaude (18) et un orifice d'entrée d'eau froide (16) dans l'élément fixe (10), des éléments de joint (28, 30) disposés dans les orifices d'entrée (16, 18) et ayant chacun une ouverture (59, 60) qui règle le débit de l'eau les traversant, caractérisé en ce que l'une des ouvertures de joint (60) a une section transversale inférieure à celle de l'autre ouverture de joint (59), la première ouverture de joint (60) ayant un passage restreint (64) réglant l'accès de l'eau de l'ouverture de joint (60) à l'élément mobile (20).

2. Robinet selon la revendication 1, caractérisé en ce que le passage restreint (64) augmente progressivement de dimension en direction de l'ouverture (60).

3. Robinet selon la revendication 2, caractérisé en ce que des moyens de séparation (42) sont disposés dans l'élément mobile (20) et séparent les orifices d'entrée d'eau chaude (18) et d'eau froide (16), empêchant les courants croisés entre eux.

4. Robinet selon la revendication 1, caractérisé en ce que ce passage restreint se présente sous la forme d'une encoche en forme générale de V (64).

5. Robinet selon la revendication 4, caractérisé en ce que cette encoche en forme générale de V (64) a un toit de recouvrement (65) empêchant l'affaissement du passage restreint (64) sous l'action de la pression de l'eau s'exerçant sur lui.

6. Robinet selon l'une des revendications 1 à 5, caractérisé en ce que l'élément fixe comporte un manchon (10), que l'élément mobile comporte un élément de tiroir (32) pouvant tourner et se déplacer d'un mouvement alternatif à l'intérieur du manchon (10) pour régler la température et le volume de l'eau circulant à travers le manchon (10) et que les joints d'orifice (28, 30) sont disposés dans les orifices d'entrée d'eau chaude (18) et d'eau froide (16) du manchon en contact étanche avec l'élément de tiroir.

7. Robinet selon la revendication 6, caractérisé en ce que l'élément de tiroir (32) comporte des zones d'orifice (46, 48) pouvant être amenées en correspondance avec les ouvertures de joint d'orifice (59, 60), les zones d'orifice de l'élément de tiroir (46, 48) étant disposées pour permettre un débit total à travers l'ouverture d'eau froide (60, 64) lorsque l'ouverture d'eau chaude (59) est fermée par cet élément de tiroir (32) et pour permettre un courant restreint à travers l'ouverture de joint d'eau froide (60, 64) lorsque l'orifice d'eau chaude (59) est ouvert à fond.

8. Robinet selon la revendication 6, caractérisé en ce que cet élément de tiroir (32) comporte des zones d'orifice (46, 48) pouvant être amenées en correspondance avec les ouvertures de joint d'orifice (59, 60), les zones d'orifice de cet élément de tiroir (46, 48) étant disposées pour permettre un débit total à travers l'ouverture de joint d'eau chaude (59) et aucune circulation à travers l'ouverture de joint d'eau froide (60), pour une position particulière de cet élément de tiroir (32), le déplacement de cet élément de tiroir (32) vers une position dans laquelle de l'eau chaude et de l'eau froide circulent toutes deux à travers les ouvertures desjoint (59, 60), faisant que le premier courant d'eau froide se fasse à travers le passage restreint (64).

9. Robinet selon la revendication 6, caractérisé en ce que ces joints (28, 30) comportent chacun une portion de corps (50) disposée circonférentiellement autour du manchon (10) et une portion d'étanchéité des orifices (52, 62) s'étendant à travers les orifices d'entrée d'eau chaude (18) et d'eau froide (16) du manchon et en coopération étanche avec l'élément de tiroir (32), ce passage restreint se présentant sous la forme d'une encoche (64) formée dans la portion d'étanchéité d'orifice (62) du joint d'eau froide (28).

**Patentansprüche**

1. Mischventil mit einem festen Teil (10) und einem beweglichen Teil (20), durch deren Relativbewegung zueinander die Temperatur und die Menge des durchfließenden Wassers bestimmbar ist, mit einem Heißwasser-Einlaßkanal (18) und einem Kaltwasser-Einlaßkanal (16) in dem festehenden Teil (10) und mit Dichtteilen (28, 30), die in den Einlaßkanälen (16, 18) angeordnet sind und jeweils eine Öffnung (59, 60) zum Bestimmen des Wasserdurchflusses aufweisen, dadurch gekennzeichnet, daß eine der Öffnungen (60) in einer Eingangskanal-Dichtung eine Querschnittsfläche aufweist, die geringer ist als die der anderen Öffnung (59) der anderen Eingangskanal-Dichtung, und daß die eine der Eingangskanal-Dichtungen (60) weiterhin einen verkleinerten Durchgang (64) zum Bestimmen des Wassereinlasses von der Öffnung (60) im Dichtteil in das bewegliche Teil (20) aufweist.

2. Mischventil nach Anspruch 1, dadurch gekennzeichnet, daß sich der verkleinert Durchgang (64) in Richtung auf die Öffnung (60) allmählich vergrößert.

3. Mischventil nach Anspruch 2, weiterhin gekennzeichnet durch eine Teilungseinrichtung (42), die innerhalb des beweglichen Teiles (20) angeordnet ist und den Heißwasser-Eingangskanal (18) vom Kaltwasser-Eingangskanal (16) in einer ein Überströmen zwischen beiden verhindernden Weise trennt.

4. Mischventil nach Anspruch 1, dadurch gekennzeichnet, daß der Verkleinerte Durchgang die Form einer im wesentlichen V-förmigen Kerbe (64) aufweist.

5. Mischventil nach Anspruch 4, dadurch gekennzeichnet, daß die im wesentlichen V-förmige Kerbe (64) eine das Zusammendrücken des verkleinerten Durchgangs (64) durch den Wasserdruck verhindernde Überdachung (65) aufweist.

6. Mischventil nach einem der Ansprüche 1 bis 5, dadurch gekennzeichnet, daß das feststehende Teil eine Hülse (10) aufweist, daß das bewegliche Teil einen Ventilkörper (32) aufweist, der hin und her beweglich und drehbar innerhalb der Hülse (10) aufgenommen ist, um die Temperatur und die Menge des Wassers zu bestimmen, das durch die Hülse (10) fließt, und daß die Dichtteile (28, 30) in den in der Hülse vorgesehenen Eingangskanälen (16, 18) für heißes und kaltes Wasser angeordnet sind und in dichtendem Kontakt mit dem Ventilkörper stehen.

7. Mischventil nach Anspruch 6, dadurch gekennzeichnet, daß der Ventilkörper (32) Eingangskanalflächen (46, 48) aufweist, die in eine überdeckende Stellung mit den Öffnungen (59, 60) der Dichtteile bringbar sind, wobei die Eingangsflächen (46, 48) des Ventilkörpers sich in einer den vollen Durchfluß durch die Kaltwasser-Öffnung (60, 64) erlaubenden Stellung befinden, wenn die Heißwasser-Öffnung (59) durch den Ventilkörper (32) geschlossen ist, und sich in einer einen eingeschränkten Durchfluß durch die Kaltwasser-Dichtungsöffnung (60, 64) erlaubenden Stellung befinden, wenn der Heißwasser-Kanal (59) voll geöffnet ist.

8. Mischventil nach Anspruch 6, dadurch gekennzeichnet, daß der Ventilkörper (32) Eingangsflächen (46, 48) enthält, die in eine überdeckende Stellung mit den Öffnungen (59, 60) der Dichtteile bringbar sind, wobei die Eingangsflächen (46, 48) des Ventilkörpers bei einer bestimmten Stellung des Ventilkörpers (32) derart angeordnet sind, daß ein voller Durchfluß durch die Heißwasser-Öffnung (59) des Dichtteiles erfolgt und der Durchfluß durch die Kaltwasser-Öffnung (60) gesperrt ist, und wobei während der Bewegung des Ventilkörpers (32) in eine Position, in der sowohl heißes als auch kaltes Wasser durch die Öffnungen (59, 60) des Dichtteiles fließt, das kalte Wasser zunächst gezwungen ist, durch den verkleinerten Durchgang (64) zu fließen.

9. Mischventil nach Anspruch 6, dadurch gekennzeichnet, daß die Dichtteile (28, 30) jeweils einen Hauptteil (50) und ein Kanaldichtteil (52, 62) aufweisen, wobei der Hauptteil (50) auf dem Umfange der Hülse (10) angeordnet ist und der Kanaldichtteil (52, 62) sich durch die Heißwasser- und Kaltwasser-Eingangskanäle (16, 18) der Hülse erstreckt und in dichtendem Kontakt mit dem Ventilkörper (32) steht, und wobei der verkleinerte Durchgang in Form einer Kerbe (64) in dem Kanaldichtteil (62) Kaltwasser-Eingangsdichtung (28) angeordnet ist.

fig.2.

fig.3.

fig.1.

0 080 018

0 080 018

2